Europäisches Patentamt

European Patent Office

Office européen des brevets

(19)

(11) Veröffentlichungsnummer: **0 209 018 B1**

# EUROPÄISCHE PATENTSCHRIFT

(12)

(45) Veröffentlichungstag der Patentschrift: **23.09.92**

(51) Int. Cl.5: **H04N 5/783**, H04N 5/93

(21) Anmeldenummer: **86109157.7**

(22) Anmeldetag: **04.07.86**

(54) **Verfahren und/oder Einrichtung zur Standbildverbesserung.**

(30) Priorität: **13.07.85 DE 3525049**

(43) Veröffentlichungstag der Anmeldung:
**21.01.87 Patentblatt 87/04**

(45) Bekanntmachung des Hinweises auf die
Patenterteilung:
**23.09.92 Patentblatt 92/39**

(84) Benannte Vertragsstaaten:
**AT BE CH DE FR GB IT LI LU NL SE**

(56) Entgegenhaltungen:
**EP-A- 0 065 365**
**EP-A- 0 071 510**
**GB-A- 2 151 104**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Hartnack, Wolfgang, Dipl.-Ing.**
**Saarstrasse 22**
**W-3005 Hemmingen(DE)**
Erfinder: **Keesen, Werner, Dr.-Ing.**
**Tiestestrasse 5**
**W-3000 Hannover(DE)**

(74) Vertreter: **Einsel, Robert, Dipl.-Ing.**
**Deutsche Thomson-Brandt GmbH Patent-**
**und Lizenzabteilung Göttinger Chaussee 76**
**W-3000 Hannover 91(DE)**

## Beschreibung

Die Erfindung betrifft ein Verfahren und/oder eine Einrichtung zur Standbildverbesserung gemäß dem Oberbegriff des Patentanspruchs 1.

Fernseheinrichtungen bewirken aufgrund des Zwischenzeilenverfahrens ein störendes Flimmern bei der Wiedergabe. Es ist bekannt, diesen störenden Einfluß durch Abschalten des Zeilensprungs zu verhindern.

Aus H. Schönfelder, Bildkommunikation, erschienen 1983 im Springer-Verlag Berlin Heidelberg New York, sind auf Seite 154 Fernsehempfänger abgebildet, die digitale Speicher zur Bildspeicherung aufweisen. Diese Speicher werden langsam über einen Kanal begrenzter Bandbreite, einen Fernsprechkanal, aufgefüllt und dienen zum Zusammenstellen der langsam ankommenden Signale zu einem Vollbild.

Eine Standbildverbesserung ist nicht angedeutet oder gelöst. Die Erfindung besteht im Prinzip darin, daß Fremdsignale digitalisiert und in einem elektronischen Speicher zwischengespeichert werden. In diesem elektronischen Speicher können das Halbbildflackern oder durch Bewegung hervorgerufene vertikale und/oder horizontale Helligkeits- und/oder Farbverschiebungen zwischen zwei Halbbildern durch Korrektur beseitigt werden.

Aufgabe der Erfindung ist es, ein Verfahren anzugeben, das bei einer Standbildwiedergabe das Halbbildflackern und/oder durch Bewegung im Bild hervorgerufene vertikale und/oder horizontale Helligkeits- und/oder Farbverschiebungen zwischen zwei Halbbildern beseitigt, ohne daß der Zeilensprung abgeschaltet wird.

Diese Aufgabe wird durch die im Anspruch 1 angegebene Maßnahme gelöst. Vorteilhafte Weiterbildungen der Erfindung sind in Unteransprüchen genannt.

Zum besseren Verständnis der Erfindung werden nachstehend einige Ausführungsbeispiele anhand von Zeichnungen näher erläutert.

Es zeigen

Fig. 1    ein stark vereinfachtes Blockschaltbild eines Videorekorders während der Wiedergabe,

Fig. 2    ein stark vereinfachtes Blockschaltbild eines Videorekorders während der Aufnahme,

Fig. 3    einen Sichtschirm mit einem bewegten Objekt,

Fig. 4    einen Sichtschirm mit diagonalen Kanten,

Fig. 5    einen Speicher mit Elementen zur Horizontalkorrektur,

Fig. 6    einen Speicher mit Elementen zu einer verbesserten Horizontalkorrektur,

Fig. 7    einen Speicher mit Elementen zu einer Vertikalkorrektur und

Fig. 8    ein stark vereinfachtes Blockschaltbild eines digitalen Videorekorders während der Wiedergabe.

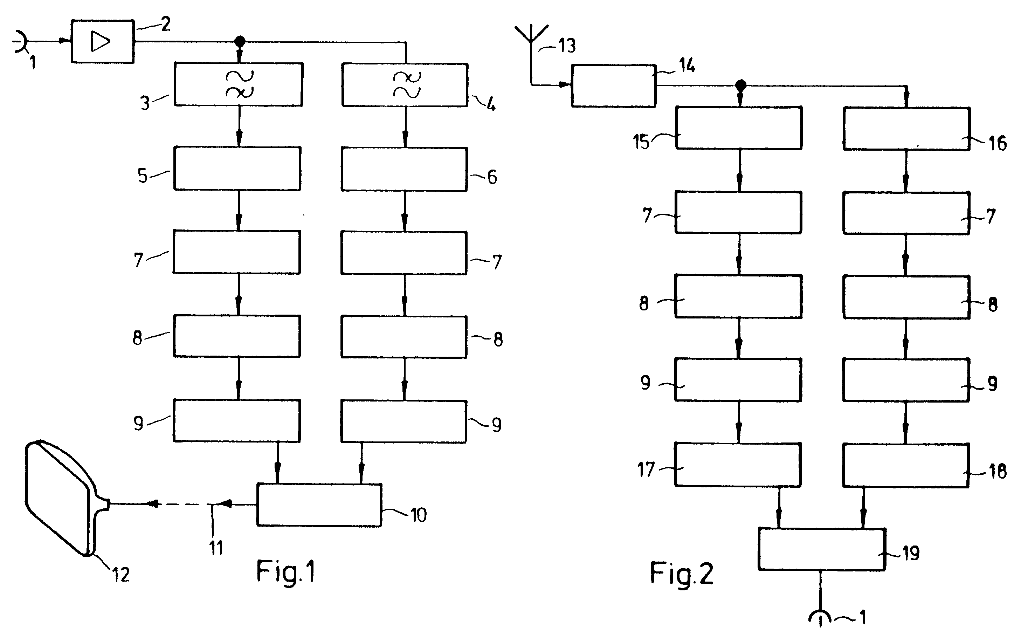

Fig. 1 zeigt einen Magnetkopf 1, der ein nicht dargestelltes Magnetband, auf dem Videosignale aufgezeichnet sind, abtastet. Die abgetasteten Videosignale gelangen von dem Magnetkopf 1 über einen Verstärker 2 an einen Hochpaß 3 und an einen Tiefpaß 4. Am Hochpaß 3 wird das Luminanzsignal des Videosignales herausgefiltert und dem Demodulator 5 zugeführt. Das Luminanzsignal wird vom Demodulator 5 demoduliert und gelangt von dort zu einem ADU 7 (ADU = Analog-Digital-Umsetzer). Das digitalisierte Luminanzsignal wird in einem elektronischen Speicher 8, im folgenden Bildspeicher genannt, zwischengespeichert. Vom Bildspeicher 8 gelangt das digitalisierte Luminanzsignal zum DAU 9 (DAU = Digital-Analog-Umsetzer). Das Chrominanzsignal des Videosignals wird im Tiefpaß 4 herausgefiltert und der Farbelektronik 6 zugeführt. Von der Farbelektronik 6 gelangt das Chrominanzsignal über einen ADU 7 zum Bildspeicher 8. Im DAU 9 wird das Chrominanzsignal in ein Analogsignal zurückverwandelt und dem Mischer 10 zugeführt, in dem Chrominanzsignal und Luminanzsignal gemischt werden. Am Ausgang 11 des Mischers 10 steht das FBAS-Signal an (FBAS = Farb-Bild-Austast-Synchron-Signal). Das FBAS-Signal kann auf einem Sichtschirm 12 als Fernsehbild sichtbar gemacht werden.

Fig. 2 zeigt eine Antenne 13, die Fernsehsignale empfängt. Die Fernsehsignale werden einem Demodulator 14 zugeführt. Das vom Demodulator 14 ausgehende FBAS-Signal wird in einer 4,43 MHz Sperre 15 und einem 4,43 MHz Bandpaß 16 in seinen Luminanz- bzw. Chrominanzanteil zerlegt. Von der Sperre 15 gelangt das Luminanzsignal an einen ADU 7 und von dort an einen Bildspeicher 8, wo das Signal zwischengespeichert wird. Vom Bildspeicher 8 wird das digitalisierte Luminanzsignal im DAU 9 in ein analoges Signal zurückverwandelt und im Modulator 17 moduliert. Das Chrominanzsignal wird im ADU 7 digitalisiert und einem Bildspeicher 8 zugeführt. Vom Bildspeicher 8 gelangt das digitalisierte Chrominanzsignal zu einem DAU 9 und wird dort in ein analoges Signal zurückverwandelt. In einem Konverter 18 wird das Chrominanzsignal mit einem heruntergesetzten Träger moduliert und von dort einem Mischer 19 zugeführt. Im Mischer 19 werden das modulierte Chrominanz- und das modulierte Luminanzsignal gemischt und einem Videokopf 1 zugeführt. Der Zweig mit den Blöcken 7,8,9,15 und 17 bildet den Luminanzzweig, der Zweig mit den Blöcken 7,8,9,16,18 bildet den Chrominanzzweig. Hier ist eine parallele Verarbeitung von Chrominanz- und Luminanzsignal dargestellt, aber auch eine multiplexe Verarbeitung wäre denkbar. Die Speicherräume für die parallelen Bildspeicher 8 für das Chrominanz- bzw. für das Luminanzsignal können gleich groß sein, denkbar ist aber auch ein Größenverhältnis von 2 : 3 (zwei Anteile Chroma und drei Anteile Luminanz). Ein Bild hat etwa 720 Spalten und 576 Zeilen, das ergibt eine Anzahl von 414 720 Bildpunkten. In der Praxis wird jeder Bildpunkt mit 8 Bit kodiert. Somit ergeben sich für ein Vollbild 3,4 Mbit Speicherraum. Für einen reibungslosen Ablauf ist ein Bildspeicherraum für zwei Vollbilder, das sind 6,8 Mbit, zur Verfügung gestellt.

Wenn ein Vollbild in horizontaler Richtung bewegte Objekte beinhaltet, sind entsprechende Zeilenabschnitte des zweiten Halbbildes gegenüber denen des ersten Halbbildes verschoben.Bei bewegten Fernsehbildern, die einen zusammenhängenden Handlungsablauf zeigen, werden Unregelmäßigkeiten, die durch das Halbbildverfahren entstehen, vom Auge integriert. Bei Standbildwiedergabe jedoch entsteht ein unangenehmes Bildflimmern.

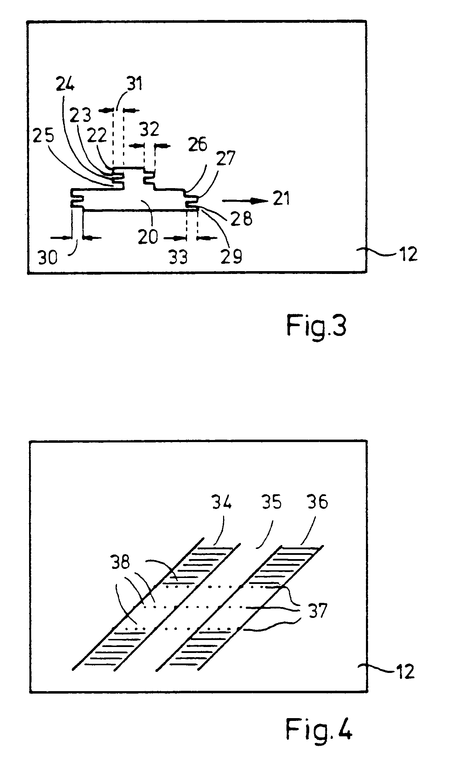

Fig. 3 zeigt einen Sichtschirm 12 mit einem Objekt 20, das in horizontaler Richtung 21 bewegt ist. Das Objekt 20 wird über acht Zeilen 22 - 29 dargestellt. Die Zeilen 22, 24, 26 und 28 gehören einem ersten Halbbild, die Zeilen 23, 25, 27 und 29 einem zweiten Kalbbild an. Über Bereiche 30 - 33 ist das Objekt 20 verzerrt dargestellt. Das Bildflimmern, das durch die Bewegung in den Bereichen 30 - 33 entsteht, wird für einen Beobachter als störend empfunden. Werden Zeilenabschnitte des zweiten Halbbildes in den Bereichen 30 - 33 der Helligkeit und/oder Farbe den Zeilen des ersten Halbbildes angepaßt, so wird das Bildflimmern oder Bewegungsflimmern beseitigt.

Fig. 4 zeigt einen Sichtschirm 12 mit zwei diagonalen dunklen Streifen 34 und 36 und einem hellen Streifen 35. Bei einem Vergleich zwischen zwei Zeilen kann nicht entschieden werden, ob eine diagonale Kante oder ob ein bewegtes Objekt vorliegt. Daher werden drei übereinanderliegende Zeilen 37 mit Bildpunkten 38 verglichen bzw. korreliert, um diagonale Kanten zu erkennen und nicht als Bewegung zu bewerten.

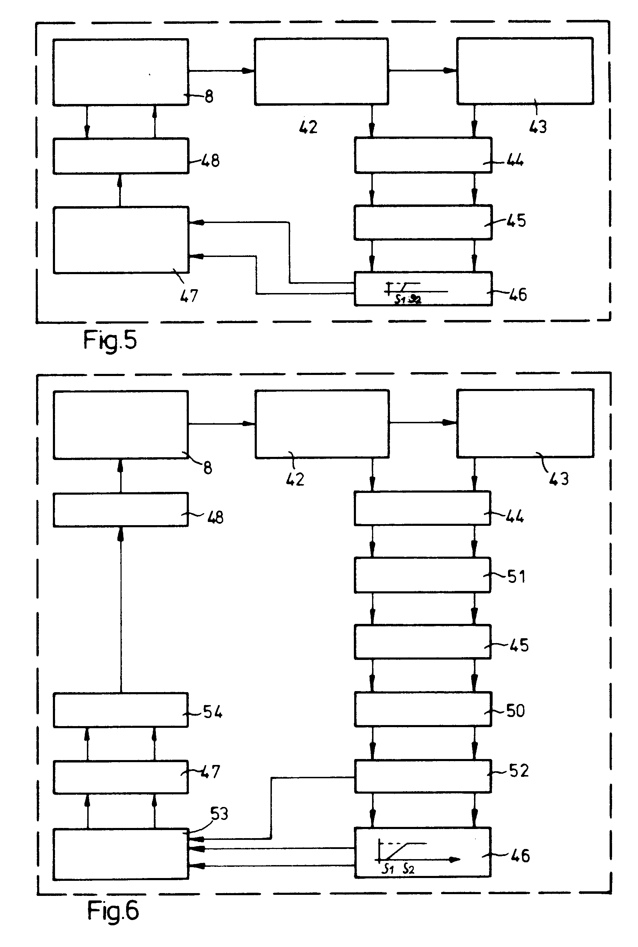

Fig. 5 zeigt einen digitalen Bildspeicher 8, der zu einer Standbildverbesserung ausgenutzt wird. Im Bildspeicher 8 sind digitalisierte Signale eines Vollbildes, bzw. zweier Halbbilder, gespeichert. Ein Zwischenspeicher 42 speichert digitalisierte Farb- und Helligkeitssignale von drei übereinanderliegenden Zeilenabschnitten ab. Die Anzahl der Bildpunkte, die in einem Zeilenabschnitt enthalten sind, entspricht ungefähr der maximal möglichen Verzerrungskorrektur bei bewegten Objekten, das sind in der Praxis etwa 15 Bildpunkte. Im Mittelwertbildner 43 wird der Mittelwert der digitalisierten Farb- bzw. Helligkeitssignale benachbarter Bildpunkte gebildet.

Durch eine Mittelwertbildung kann Rauschen erkannt und unterdrückt werden. Rauschen bedeutet kleine Unterschiede in der Helligkeit und/oder Farbe, im Gegensatz dazu bedeuten Verzerrungen oder Verschiebungen die Anzahl der Bildpunkte, bei denen große Unterschiede in der Helligkeit und/oder Farbe vorliegen, wie sie z.B. bei einer Bewegung eines dunklen Objektes vor hellem Hintergrund auftreten. Der Mittelwert wird nachfolgender Gleichung gebildet:

$$M = Sum1 ( Zo(i) + Zm(i) + Zu(i) ) / 3L.$$

Dabei steht Sum1 für das griechische S (Summationszeichen) und für die Addition der in Klammern stehenden Summanden mit dem laufenden Index i von 1 bis L (L liegt etwa in der Größenordnung 15). Zo(i), Zm(i) und Zu(i) stehen für die Helligkeit bzw. Farbe an den Bildpunkten i, auch Pixel (picture element) genannt, in einer oberen (o), in einer mittleren (m) und in einer unteren (u) Zeile, wobei m ein erstes bzw. zweites Halbbild und o und u ein zweites bzw. erstes Halbbild kennzeichnen. Im Subtrahierer 44 werden die absoluten Werte und die jeweiligen Mittelwerte miteinander verglichen und subtrahiert. Der Subtrahierer 44 arbeitet nach folgenden Gleichungen:

$$Do(i) = Zo(i) - M, i = 1,...,L$$
$$Dm(i) = Zm(i) - M, i = 1,...,L$$
$$Du(i) = Zu(i) - M, i = 1,...,L$$

Im Korrelator 45 werden Werte von Bildpunkten, ein Wert ist die Differenz zwischen Mittelwert und Absolutwert eines Bildpunktes, miteinander korreliert. Das kann mit Hilfe einer Produkt- oder einer Differenzbildung geschehen. Der Korrelator 45 arbeitet mit einer Produktbildung gemäß:

$$Ko(j) = Sum2 Pro1 ( Do(i) * Dm(i+k) )$$

mit 1 kleiner, gleich (i+k) und (i+k) kleiner, gleich L, ansonsten Do(i) * Dm(i+k) = 0. Dabei läuft j von (-L+1) bis (+L-1). Pro1 steht für das griechische P (Pi, Produktzeichen) und für die Multiplikation der Faktoren mit dem laufenden Index i von 1 bis L. Sum2 steht für das griechische S (Summationszeichen) und für die Addition der Produkte mit dem laufenden Index k von (L-1) bis (1-L). Der Ort j des maximalen Korrelationswertes ergibt die notwendige Verschiebung vo beim Bildpunkt P. Die Korrelation wird zeilenweise, mit dem ersten Bildpunkt einer Zeile beginnend, dann folgt der zweite, der dritte usw., durchgeführt. Die Schwellenschaltung 46 entscheidet, ob Digitalsignale für eine Anpassung geändert werden. Sie bewertet kleine Korrelationswerte, die kleiner als die Schwelle S1 sind, als Rauschen. Zwischen den Blöcken 44 - 47 sind jeweils zwei Übertragungswege angeordnet, da eine Korrelation einer aktuellen Zeile sowohl mit einer darunter als auch einer darüberliegenden Zeile durchgeführt wird. Werden als Anpassungskriterium bzw. Verschiebungskriterium nur die Werte Zo(i) und Zm(i) aus dem Zwischenspeicher 42 betrachtet, so würde in einem Bild ohne bewegte Objekte an schrägen Kanten (Fig. 4) eine scheinbare Bewegung detektiert. Dies wird dadurch vermieden, daß auch Zu(i) mit Zm(i) korreliert wird:

Ku(j) = Sum3 Pro2 ( Du(i) * (Dm(i + k) )

mit 1 kleiner, gleich (i + k) und (i + k) kleiner, gleich L, ansonsten Du(i) * Dm(i + k) = 0. Dabei läuft j von (-L + 1) bis ( + L-1). Pro2 steht für das griechische P (Pi, Produktzeichen) und für die Multiplikation der Faktoren mit dem laufenden Index i von 1 bis L. Sum3 steht für das griechische S (Summationszeichen) und für die Addition der Produkte mit dem laufenden Index k von (L-1) bis (1- L). Daraus ergibt sich entsprechend vo auch vu. An einer schrägen Kante ist nun vo = -vu. Auf den Übertragungswegen werden Signale, die ein Maß für die jeweilig ausgeführten Operationen sind, zwischen den einzelnen Blöcken 8, 42 - 48 übertragen. Die Helligkeits-, Farbwerte und/oder die Anzahl der Bildpunkte, die angepaßt werden, richtet sich nach dem Mittelwertbildner 47, der sowohl die Verzerrung vu von einer darunter als auch die Verzerrung vo von einer darüberliegenden Zeile zu einer aktuellen Zeile berücksichtigt. Vorteilhaft wird nach folgender Gleichung verfahren: V (Gesamt) = (vo + vu) /2. V (Gesamt) ist an der schrägen Kante Null. Der Korrelator 45 und die Schwellenschaltung 46 haben für die Berechnung von vu und vo die gleiche Funktion und sind somit nur einmal vorhanden. In den Zeilenspeicher 48 wird nun an die Stelle des Bildpunktes P der Helligkeits- und/oder Farbwert des um -V (Gesamt) verschobenen Bildpunktes aus der gleichen Zeile gespeichert. Wenn die Helligkeits- und/oder Farbwerte einer vollständigen Zeile im Zeilenspeicher 48 enthalten ist, werden diese Werte an die entsprechende Stelle im Bildspeicher geladen. Wenn alle Zeilen des 2. Halbbildes in der beschriebenen Weise behandelt worden sind, ist das im Bildspeicher 8 enthaltene Bild weitgehend frei von horizontalem Bewegungsflimmern. Die aktuelle Zeile wird im Zeilenspeicher 48 korrigiert und in den digitalen Bildspeicher 8 zurückgeschrieben.

Eine bevorzugte Ausführungsform einer Standbildverbesserung zeigt die Fig. 6. Zusätzlich zu den in der vorherigen Figur beschriebenen Funktion wird ein Filter 50 hinzugefügt, das Bildpunkte aus der Zeilenabschnittsmitte stärker berücksichtigt als am Rande des Zeilenausschnitts liegende Bildpunkte. Das Filter 50 arbeitet vorteilhaft gemäß der Gleichung : f(j) = (1 + cos /pi.j /(L + 1)/ )/2 mit dem laufenden Index j von (-L + 1) bis ( + L-1) und L als Anzahl der Bildpunkte. In der Praxis hat sich gezeigt, daß nach einer Korrelation benachbarte, annähernd gleich große Korrelationswerte auftreten können. Dieses Ereignis tritt dann auf, wenn bei einer Analog-Digital-Umsetzung Spitzen einer Amplitudenkurve, die zwischen zwei benachbarten Bildpunkten bzw. Abtastpunkten (Abtastpunkte und Bildpunkte sind in diesem Fall identisch) liegen, nicht erfaßt werden (Abtasttheorem: T = 1/2 fg). Abhilfe schafft eine Interpolationsschaltung 51, die Zwischenwerte zwischen Abtastpunkten errechnet und damit solche Spitzen interpoliert und erkennt. Das entspricht einer Überabtastung. In der Ortsschaltung 52 werden maximal vier Extremwerte und deren Ort abgespeichert. Zwei Extremwerte ergeben sich aus dem Vergleich von einer darüberliegenden Zeile zu einer aktuellen Zeile und zwei Extremwerte von einer darunterliegenden Zeile zu einer aktuellen Zeile. Der Ort entspricht der Verzerrung oder der Verschiebung, und der Ort wird durch einen Verschiebungsvektor markiert. Alle vier Extremwerte werden der Schwellenschaltung 46 zugeführt, die Extremwerte unterhalb einer Schwelle S1 nicht berücksichtigt, Extremwerte zwischen zwei Schwellen S1 und S2 mit einem Faktor zwischen 0 und 1 bewertet bzw. multipliziert und Extremwerte oberhalb der Schwelle S2 mit dem Faktor 1 multipliziert. Der Faktor zwischen 0 und 1 errechnet sich aus einer linearen Funktion zwischen S1 und S2. S1 liegt in der Größenordnung von 250 bis 500, S2 = 2 * S1. Das Rauschen in den Signalen, die ein Maß für die Beschaffenheit von Bildpunkten der Bilder sind, kann in einem mittleren Korrelationswert angegeben werden. S1 liegt etwas unterhalb, S2 etwas oberhalb des mittleren Korrelationswertes.

In der Plausibilitätsschaltung 53 wird, wenn zwei Extremwerte vorliegen, ein neuer Ort bzw. ein Verschiebungsvektor errechnet, der einen Ort zwischen den beiden Extremwerten angibt. Die Lage des Ortes zwischen beiden Extremwerten entspricht der Differenz der Extremwerte. Je kleiner die Differenz ist, umso weniger werden Signale angepaßt. Zudem wird in der Plausibilitätsschaltung 53, falls Korrelationswerte zweier benachbarter Bildpunkte etwa gleichgroß sind (zwei Extremwerte nebeneinander liegen) und eine Spitze von der Interpolationsschaltung 51 in der Mitte beider Bildpunkte erkannt ist, beiden Bildpunkten, die durch den Ortsvektor markiert sind, ein bzw. mehrere Signale zugeordnet, die eine gleiche Helligkeit und/oder Farbe ausdrücken. Dieser Umstand wird durch den Signalweg zwischen der Interpolationsschaltung 52 und der Plausibilitätsschaltung 53 dargestellt. In dem Mittelwertbildner 47 wird die Verschiebung der Vektoren zwischen der darüberliegenden zu der aktuellen und der darunterliegenden zu der aktuellen Zeile gemittelt. Liegt ein Mittelwert zwischen zwei natürlichen Zahlen, das entspricht einem Abtastpunkt zwischen zwei benachbarten Bildpunkten, so wird jeweils beiden Bildpunkten ein bzw. mehrere Signale zugeordnet, die eine gleiche Helligkeit und/oder Farbe ausdrücken. In der zweiten Plausibilitätsschaltung 54 wird dann vo mit vu verglichen und auf Plausibilität überprüft. Wenn vo größer Null und vu kleiner Null oder umgekehrt, dann wird v (Gesamt) zu Null gesetzt. Wenn der Betrag von (vo-vu) kleiner als 2, dann bleibt v (Gesamt) unverändert, wenn dieser Betrag größer 11, dann wird v (Gesamt) zu Null gesetzt, ansonsten wird v (Gesamt) mit einem linear zwischen Null und Eins interpoliertem Faktor multipliziert.

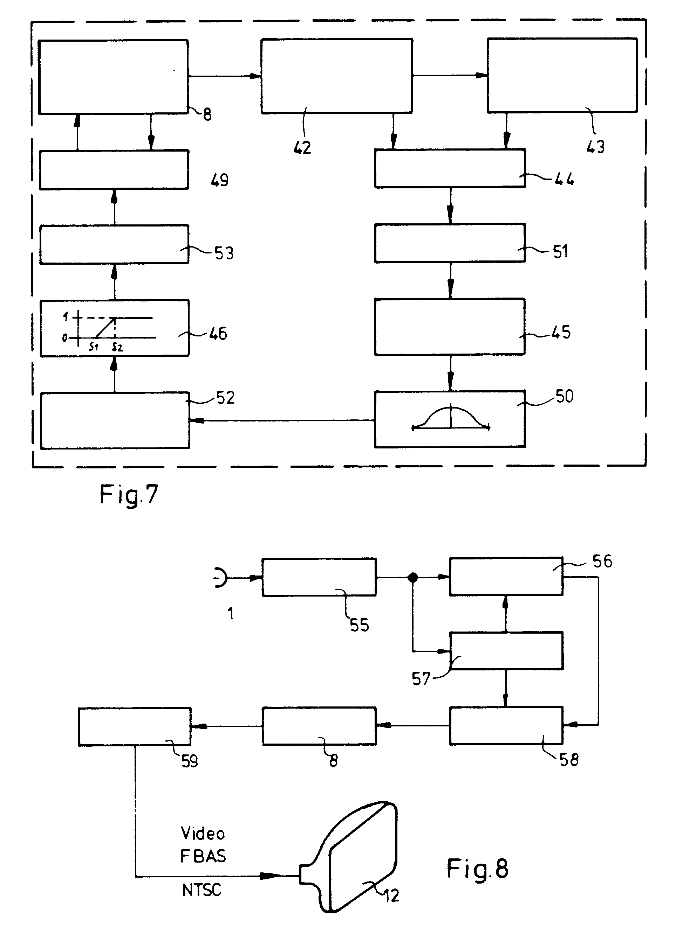

Fig. 7 zeigt einen digitalen Bildspeicher 8, in dem vorteilhaft eine Standbildkorrektur in Bezug auf eine vertikale Verschiebung durchgeführt werden kann. Dazu wird in dem Zwischenspeicher 42 ein Spaltenabschnitt zwischengespeichert. In dem Spaltenabschnitt sind übereinanderliegende Bildpunkte angeordnet, die alle zu verschiedenen Zeilen gehören. Die Helligkeits- und/oder Farbwerte S1 und S2 der Bildpunkte sind in digitaler Signalform (Bytes) abwechselnd jeweils in einem ersten (S1) und einem zweiten (S2) Halbbild angeordnet. Im Mittelwertbildner wird dann der Mittelwert gemäß folgender Gleichung berechnet:

$$MS = Sum4 ( S1(i) + S2(i) ) / 2LS$$

MS steht für den Spaltenmittelwert, LS für die Spaltenlänge eines Halbbildes und i ist der laufende Index von 1 bis LS. Sum4 steht für das Summationszeichen und für die Addition der Summanden mit dem laufenden Index i von 1 bis LS. Im Subtrahierer wird die Differenz gebildet gemäß:

$$DS1(i) = S1(i) - MS , i = 1,...,LS$$
$$DS2(i) = S2(i) - MS , i = 1,...,LS$$

wobei LS vorzugsweise in der Größenordnung 10 liegt. In dem Korrelator 45 werden DS1 und DS2 korreliert gemäß:

$$KS(j) = Sum5 Pro3 ( DS1(i) * DS2(i + k) )$$

mit 1 kleiner, gleich (i + k) und (i + k) kleiner, gleich LS, ansonsten DS1(i) * DS2(i + k) = 0. Dabei läuft j von (-LS + 1) bis (LS-1). Pro3 steht für das griechische P und für die Multiplikation der Faktoren mit dem laufenden Index i von 1 bis LS. Sum5 steht für das Summationszeichen und für die Addition der Produkte mit dem laufenden Index k von (LS-1) bis (1-LS). Der Ort j des maximalen Korrelationswertes ergibt die notwendige Verschiebung -Vs beim Bildpunkt P. Die Korrelation erfolgt spaltenweise, mit dem ersten Bildpunkt vom oberen bzw. unteren Rand eines Fernsehbildes beginnend, und wird für alle weiteren Bildpunkte, dem zweiten, dem dritten usw. bis zum unteren bzw. oberen Rand des Fernsehbildes über die Weglänge LS durchgeführt. Über den Mittelwertbildner 43 und den Subtrahierer 44 gelangen Signale zur Interpolationsschaltung 51. Die Interpolationsschaltung 51 liegt vor dem Korrelator 45. Vom Korrelator 45 werden Signale zum Filter 50 weitergeleitet. In der Ortsschaltung 52 werden der größte und der zweitgrößte Korrelationswert festgehalten. In der Schwellenschaltung 46 wird entschieden, ob Digitalsignale im Spaltenspeicher 49 geändert werden. Zwischenwerte werden in der Plausibilitätsschaltung 53 eliminiert. Von der Plausibilitätsschaltung 53 aus wird die aktuelle Spalte im Spaltenspeicher 49 korrigiert.

Vorteilhaft kann der digitale Bildspeicher 8 mit Standbildverbesserung (Fig. 3 - 5) in einen digitalen Videorekorder eingesetzt werden.

Fig. 8 zeigt das stark vereinfachte Blockschaltbild eines digitalen Videorekorders. Der Magnetkopf 1 tastet ein nicht dargestelltes Magnetband ab und führt abgetastete Signale einem Demodulator 55 zu. Anstelle des Demodulators 55 kann auch ein Dekoder, ein Demultiplexer oder eine Einheit aus allen drei genannten Einheiten angeordnet sein. Vom Demodulator 55 werden digitale Signale an einen inversen Quantisierer 56 und an eine Steuerung 57 abgegeben. Die Steuerung 57 steuert den inversen Quantisierer 56 und den inversen Transformator 58. Vom inversen Quantisierer 56 werden digitale Daten dem inversen Transformator 58 zugeführt. Vom inversen Transformator 58 werden digitale Signale dem Bildspeicher 8 zugeführt. Im Bildspeicher 8 können Standbilder gemäß der Erfindung (Fig. 5 - 7) verbessert werden. Ein Wandler 59 wandelt die vom Bildspeicher 8 kommenden digitalen Daten in ein Videosignal bzw. in ein FBAS- oder NTSC-Signal um und führt sie einem Sichtschirm 12 zu.

Durch die Mittelwertbildung, Subtraktion und Schwellwertschaltung 46 ist Rauschen unterdrückt. Die Schwellwertschaltung 46 entscheidet, ob Digitalsignale angepaßt werden. Nach der Korrelation ist eine zweite Mittelwertbildung 47 vorgesehen. Die zweite Mittelwertbildung 47 beseitigt eine Verzerrung einer aktuellen Zeile zu einer darüber und einer darunterliegenden Zeile. Ein Zwischenspeicher 42 ist für drei übereinanderliegende Zeilen verwendet. Ein Zwischenspeicher 42 ist für eine Spalte verwendet. Die Verarbeitung von digitalen Chrominanz- und Luminanzsignalen erfolgt parallel. Nach dem Korrelator 45 wird ein Filter 50 verwendet. Das Filter 50 berücksichtigt Bildpunkte aus der Mitte eines Zeilenabschnittes stärker als am Rande eines Zeilenabschnittes gelegene Bildpunkte. Vor dem Korrelator 50 ist eine Interpolationsschaltung 51 vorgesehen. Die Interpolationsschaltung 51 interpoliert Zwischenwerte zwischen Abtastpunkten eines Luminanz- bzw. Chrominanzsignals. Die Interpolationsschaltung 51 erkennt Farb- und/oder Helligkeitsspitzen. Aufgrund der Interpolationsschaltung 51 werden zwei benachbarten Bildpunkten 38 zwei Signale zugeordnet, die etwa gleich groß sind. Bei einer Korrelation zwischen einer aktuellen und einer danebenliegenden Zeile sind ein oder mehrere Extremwerte ermittelbar. Die Differenz der Extremwerte ist ein Maß für die Verzerrung.

**Patentansprüche**

1. Verfahren zur Standbildverbesserung in Bildverarbeitungsgeräten, **dadurch gekennzeichnet**, daß Helligkeitswerte und/oder Farbwerte von Bildpunkten von benachbarten Zeilenabschnitten von jeweils zwei benachbarten Halbbildern, von denen jeweils das zweite Halbbild bewegungskompensiert werden soll, in elektronische Speichermittel (8, 42, 48) eingeschrieben werden und die Helligkeits- und/oder Farbwerte der Bildpunkte in einem oder zwei Zeilenabschnitten (23, 25, 27, 29) des zweiten Halbbilds an die entsprechende Position der Helligkeits- und/oder Farbwerte der Bildpunkte aus dem benachbarten Zeilenabschnitt (22, 24, 26, 28) eines ersten Halbbilds verschoben werden, indem mittels einer bildpunktweise fortschreitenden Korrelation (45) zwischen den Helligkeits- oder Farbwerten der Bildpunkte der Zeilenabschnitte ein Maß für die Bewegung in Zeilenrichtung zwischen den beiden Halbbildern ermittelt wird und die Helligkeits- oder Farbwerte der Bildpunkte des zweiten Halbbilds entsprechend diesem Maß bewegungskompensiert in den Speichermitteln (8, 42, 48) angeordnet werden.

2. Verfahren nach Anspruch 1, **dadurch gekennzeichnet**, daß jeweils zehn bis zwanzig Bildpunkte breite Zeilenabschnitte miteinander korreliert werden.

3. Verfahren nach Anspruch 1 oder 2, **dadurch gekennzeichnet**, daß vor der Korrelation (45) innerhalb der Zeilenabschnitte eine Mittelwertbildung (43) und eine Subtraktion (44) von den Helligkeits- und/oder Farbwerten der entsprechenden Bildpunkte durchgeführt wird.

4. Verfahren nach einem oder mehreren der Ansprüche 1 bis 3, **dadurch gekennzeichnet**, daß die Korrelation (45) durch eine Produktbildung realisiert ist.

5. Verfahren nach einem oder mehreren der Ansprüche 1 bis 4, **dadurch gekennzeichnet**, daß ein Zeilenabschnitt aus dem ersten Halbbild jeweils mit dem oberhalb und unterhalb liegenden Zeilenabschnitt der benachbarten Zeilen aus dem zweiten Halbbild miteinander korreliert wird und die Bewegungskompensation nur dann durchgeführt wird, wenn keine diagonale Struktur im Bildinhalt aufgrund eines Vergleichs von diesen beiden Bewegungs-Maßen ermittelt wird.

6. Verfahren nach einem oder mehreren der Ansprüche 1 bis 5, **dadurch gekennzeichnet**, daß die Bewegungskompensation nur dann durchgeführt wird, wenn durch Korrelation (45) gebildete Ergebniswerte einen festgelegten Schwellwert (46) überschreiten.

7. Verfahren nach einem oder mehreren der Ansprüche 1 bis 6, **dadurch gekennzeichnet**, daß die durch die Korrelation (45) gebildeten Ergebniswerte zu den Enden der Zeilenabschnitte hin mit abfallender Amplitude gewichtet werden.

8. Verfahren nach einem oder mehreren der Ansprüche 1 bis 7, **dadurch gekennzeichnet**, daß vor der Korrelation (45) zwischen den Bildpunkten der Zeilenabschnitte Helligkeits- und/oder Farb-Zwischenwerte gebildet (51) werden.

9. Verfahren nach einem oder mehreren der Ansprüche 1 bis 8, **dadurch gekennzeichnet**, daß zusätzlich mittels einer zweiten Korrelation innerhalb von Spaltenabschnitten Bildpunkte des zu korrigierenden Halbbilds in ihrer Helligkeit und/oder Farbe an die Helligkeit und/oder Farbe von entsprechenden Bildpunkten des anderen Halbbilds durch vertikale Verschiebung von Bildinhalten angepaßt werden, wenn eine entsprechende Bewegung im Bildinhalt vorliegt.

10. Einrichtung zur Durchführung eines Verfahrens nach einem oder mehreren der Ansprüche 1 bis 9, versehen mit elektronischen Speichermitteln (8), in denen jeweils die Helligkeits- und/oder Farbwerte von Bildpunkten zweier Halbbilder gespeichert sind, mit nachgeschalteten Zwischenspeichermitteln (42) für Bildpunkt-Werte von Zeilenabschnitten, in denen jeweils ein Zeilenabschnitt aus dem ersten Halbbild und ein darüber und ein darunter liegender, benachbarter Zeilenabschnitt aus dem zweiten Halbbild gespeichert werden, mit einem nachgeschalteten ersten Mittelwertbildner (43) für Farb- oder Helligkeitswerte von Bildpunkten dieser Zeilenabschnitte, mit einem dem Zwischenspeicher (42) und dem ersten Mittelwertbildner (43) nachgeschalteten Subtrahierer (44), der in jedem der Zeilenabschnitte von den Bildpunkt-Werten den jeweiligen Mittelwert für den Zeilenabschnitt subtrahiert, mit einem dem Subtrahierer (44) nachgeschalteten Korrelator (45) für die Zeilenabschnitte mit den im Subtrahierer (44) gebildeten Werten, mit einer nachgeschalteten Schwellenschaltung (46) für die Ergebniswerte der Korrelation, die die Verschiebung von Bildpunkt-Werten bei unterhalb einer Schwelle liegenden Ergebniswerten unterbindet, mit einem nachgeschalteten zweiten Mittelwertbildner (47), der die Verschiebungs-Maße für den oberhalb und den unterhalb liegenden Zeilenabschnitt mittelt, mit einem nachgeschalteten Zeilenspeicher (48), dessen Inhalt nach der erfolgten Bewegungskompensation für die Bildpunkt-Werte einer ganzen Zeile an die entsprechende Stelle in den Speichermitteln (8) geladen wird.

## Claims

1. A method of improving the freeze frame in picture processing equipment, **characterised in that** brightness values and/or colour values of scanning dots of adjacent line portions of two adjacent fields respectively are entered in electronic storage means (8, 42, 48), the second field of which in each case is to be movement compensated, and the brightness and/or colour values of the scanning dots in one or two line portions (23, 25, 27, 29) of the second field are shifted to the appropriate position of the brightness and/or colour values of the scanning dots from the adjacent line portion (22, 24, 26, 28) of a first field, while with the aid of a correlation (45), which progresses dot by dot, between the brightness or colour values of the scanning dots of the line portions, a measure of the movement in line direction between the two fields is ascertained and the brightness or colour values of the scanning dots of the second field are arranged in the storage means (8, 42, 48) movement-compensated in accordance with this measure.

2. A method according to claim 1, **characterised in that** line portions which are ten to twenty scanning dots wide in each case are correlated with each other.

3. A method according to claim 1 or 2, **charac-**terised in that before correlation (45) within the line portions a mean value formation (43) and a subtraction (44) from the brightness and/or colour values of the appropriate scanning dots is carried out.

4. A method according to one or more of claims 1 to 3, **characterised in that** the correlation (45) is effected by forming a product.

5. A method according to one or more of claims 1 to 4, **characterised in that** a line portion from the first field is correlated respectively with the line portion of the adjacent lines from the second field which lie above and below, and the movement compensation is only carried out if no diagonal structure is ascertained in the picture content based on a comparison of these two movement measures.

6. A method according to one or more of claims 1 to 5, **characterised in that** the movement compensation is only carried out if result values formed by correlation (45) exceed a fixed threshold (46).

7. A method according to one or more of claims 1 to 6, **characterised in that** the result values formed by correlation (45) are weighted towards the ends of the line portions as the amplitude falls.

8. A method according to one or more of claims 1 to 7, **characterised in that** before correlation (45) between the scanning dots of the line portions, intermediate brightness and/or colour values are formed (51).

9. A method according to one or more of claims 1 to 8, **characterised in that** in addition, with the aid of a second correlation within column portions, scanning dots of the field to be corrected are matched in their brightness and/or colour to the brightness and/or colour of appropriate scanning dots of the other field by vertical shifting of picture contents, if there is an appropriate movement in the picture content.

10. A device for carrying out a method according to one or more of claims 1 to 9, provided with electronic storage means (8), in which are stored respectively the brightness and/or colour values of scanning dots of two fields, having connected thereto in series: intermediate storage means (42) for scanning dot values of line portions, in which in each case a line portion from the first field and an adjacent line portion, which lies above and below it, from the second field are stored: first mean value former (43) for colour or brightness values of scanning dots of these line portions, a subtractor (44) connected after the intermediate store (42) and the first mean value former (43), which subtractor in each of the line portions subtracts the respective mean value for the line portion from the scanning dot values: a correlator (45) connected after the subtractor (44) for the line portions with the values formed in the subtractor (44): a threshold circuit (46) for the result values of the correlation which eliminates the shift of scanning dot values for result values below a threshold: a second mean value former (47) which effects the shift measures for the line portion which is above and below: and a line store (48), the content of which is loaded, after successful movement compensation for the scanning dot values of a whole line, into the appropriate point in the storage means (8).

**Revendications**

1. Procédé pour l'amélioration de l'arrêt sur image dans des appareils de traitement d'images, **caractérisé en ce** que les valeurs de luminosité et/ou de couleur de points d'image de sections de lignes voisines de deux trames respectivement voisines, parmi lesquelles respectivement la seconde trame doit être compensée quant à son déplacement, sont mémorisées dans des moyens de mémorisation électroniques (8, 42, 48) et que les valeurs de luminosité et/ou de couleur des points d'image sont décalées dans une ou deux sections de lignes (23, 25, 27, 29) de la seconde trame à la position correspondante des valeurs de luminosité et/ou de couleur des points d'image provenant de la section de lignes voisines (22, 24, 26, 28) d'une première trame, une mesure pour le déplacement dans le sens des lignes entre les deux trames étant déterminée au moyen d'une corrélation (45) avançant point d'image par point d'image entre les valeurs de luminosité ou de couleur des points d'image des sections de lignes et que les valeurs de luminosité ou de couleur des points d'image de la seconde trame sont placées dans les moyens de mémorisation (8, 42, 48) en étant compensées en déplacement conformément à cette mesure.

2. Procédé selon la revendication 1, **caractérisé en ce** que respectivement dix à vingt points d'image de larges sections de lignes sont corrélés les uns aux autres.

3. Procédé selon la revendication 1 ou 2, **caractérisé en ce** qu'avant la corrélation (45) à l'intérieur des sections de lignes une formation de valeur moyenne (43) est effectuée et une soustraction (44) des valeurs de luminosité et/ou de couleur des points d'image correspondants.

4. Procédé selon l'une ou plusieurs des revendications 1 à 3, **caractérisé en ce** que la corrélation (45) est réalisée par une formation de produit.

5. Procédé selon l'une ou plusieurs des revendications 1 à 4, **caractérisé en ce** qu'une section de lignes de la première trame est respectivement corrélée à la section de lignes située au-dessus et au-dessous des lignes voisines de la seconde trame et que la compensation du déplacement n'est effectuée que lorsqu'il n'est pas détecté de structure diagonale dans le contenu de l'image en raison d'une comparaison de ces deux mesures du déplacement.

6. Procédé selon l'une ou plusieurs des revendications 1 à 5, **caractérisé en ce** que la compensation du déplacement n'est effectuée que lorsque des valeurs de résultat formées par corrélation (45) dépassent une valeur seuil (46) fixée.

7. Procédé selon l'une ou plusieurs des revendications 1 à 6, **caractérisé en ce** que les valeurs de résultat formées par la corrélation (45) sont pondérées en direction des extrémités des sections de lignes avec amplitude décroissante.

8. Procédé selon l'une ou plusieurs des revendications 1 à 7, **caractérisé en ce que** des valeurs intermédiaires de luminosité et/ou de couleur (51) sont formées avant la corrélation (45) entre les points d'image des sections de lignes.

9. Procédé selon l'une ou plusieurs des revendications 1 à 8, **caractérisé en ce** que des points d'image de la trame à corriger sont adaptés en plus quant à leur luminosité et/ou couleur au moyen d'une seconde corrélation à l'intérieur des sections de colonnes à la luminosité et/ou couleur de points d'image correspondants de l'autre trame par déplacement vertical de contenus d'image lorsqu'il y a un déplacement correspondant dans le contenu de l'image.

10. Dispositif pour réaliser un procédé selon l'une ou plusieurs des revendications 1 à 9, pourvu de moyens de mémorisation électroniques (8) dans lesquels respectivement les valeurs de luminosité et/ou de couleur de points d'image de deux trames sont mémorisées, avec des moyens de mémorisation intermédiaires (42) intercalés à la suite pour des valeurs de points d'image de sections de lignes dans lesquels respectivement une section de lignes de la première trame et une section de lignes voisines de la seconde trame située au-dessus et une section de lignes voisines située au-dessous sont mémorisées, avec un premier formateur de valeur moyenne (43) intercalé à la suite pour les valeurs de couleur ou de luminosité de points d'image de ces sections de lignes, avec un soustracteur (44) intercalé à la suite de la mémoire temporaire (42) et du premier formateur de valeur moyenne (43) qui soustrait dans chacune des sections de lignes des valeurs de points d'image la valeur moyenne respective pour la section de lignes, avec un corrélateur (45) intercalé à la suite du soustracteur (44) pour les sections de lignes avec les valeurs formées dans le soustracteur (44), avec un circuit de seuil (46) intercalé à la suite pour les valeurs de résultat de la corrélation qui empêche le déplacement de valeurs de points d'image pour des valeurs de résultat situées au-dessous d'un seuil, avec un second formateur de valeur moyenne (47) intercalé à la suite qui forme la moyenne des mesures de déplacement pour la section de lignes située au-dessus et la section de lignes située au-dessous, avec une mémoire de lignes (48) intercalée à la suite dont le contenu est chargé à l'endroit correspondant dans les moyens de mémorisation (8) après que la compensation du déplacement ait eu lieu pour les valeurs des points d'image d'une ligne entière.

Fig.2

Fig.1

Fig.3

Fig.4

Fig.5

Fig.6

Fig.7

Video
FBAS

NTSC

Fig.8